Europäisches Patentamt

European Patent Office

Office européen des brevets

(19)

(11) Veröffentlichungsnummer : **0 141 070**
**B1**

(12) # EUROPÄISCHE PATENTSCHRIFT

(45) Veröffentlichungstag der Patentschrift :
**09.11.88**

(51) Int. Cl.⁴ : **G 05 B 19/12, G 05 B 19/417**

(21) Anmeldenummer : **84109268.7**

(22) Anmeldetag : **04.08.84**

(54) Kodiersystem zum Erfassen von Daten von Werkstücken auf Transferstrassen.

(30) Priorität : **02.09.83 DE 3331694**

(43) Veröffentlichungstag der Anmeldung :
**15.05.85 Patentblatt 85/20**

(45) Bekanntmachung des Hinweises auf die Patenterteilung : **09.11.88 Patentblatt 88/45**

(84) Benannte Vertragsstaaten :
**CH DE FR GB IT LI**

(56) Entgegenhaltungen :
**AT-A- 291 853**
**US-A- 4 196 418**
**US-A- 4 309 600**
**US-A- 4 377 890**

(73) Patentinhaber : **ROBERT BOSCH GMBH**
**Postfach 50**
**D-7000 Stuttgart 1 (DE)**

(72) Erfinder : **Fauser, Edwin**
**Justinus-Kerner-Strasse 8**
**D-7257 Ditzingen (DE)**
Erfinder : **List, Hans**
**Bohrainstrasse 20**
**D-7530 Pforzheim (DE)**
Erfinder : **Schirmer, Günter**
**Kettenweg 13**
**D-7121 Ingersheim (DE)**
Erfinder : **Hesser, Paul**
**Katharinenstrasse 9**
**D-7141 Freiberg (DE)**

EP 0 141 070 B1

## Beschreibung

### Stand der Technik

Die Erfindung geht aus von einem Kodiersystem zum Erfassen von binären Daten über die Kennung sowie den Bearbeitungs- und Montagezustand von Werkstücken auf einer Transferstraße nach der Gattung des Hauptanspruchs.

Aus der US-PS 4 196 418 ist ein Detektierplättchen für eine Identifizierungsvorrichtung bekannt, die zum Erfassen der Anwesenheit von zu einer Überwachungsstelle gelangenden Personen, Tieren oder Gegenständen dient. Die Überwachungsstelle enthält einen Hochfrequenz-Sender und das Detektierplättchen arbeitet als Signalgeber, das einen auf die Frequenz des Hochfrequenz-Senders abgestimmten Resonanzkreis, einen Generator für binär kodierte Schaltsignale und einen mit dem Resonanzkreis gekoppeltes Schaltglied enthält, dem die Schaltsignale zugeführt werden und das den Resonanzkreis im Takt der Schaltsignale verstimmt. Das Detektierplättchen ist derart ausgebildet, daß es die für den Betrieb der elektronischen Schaltung erforderliche Energie aus dem Hochfrequenzsignal des Senders ableitet. Die im Detektierplättchen enthaltenen kodierten Daten werden einmal vorgegeben und im nachfolgenden Betrieb nicht mehr geändert.

Aus der AT-PS 291 853 ist eine automatische Förderanlage bekannt, bei der Förderwagen vorgesehen sind, die Einrichtungen zum Empfangen und Abgeben von kodierten Informationen enthalten. Die Signalübertragung erfolgt mit Hilfe eines Magnetfeldes, das entweder von Permanentmagneten oder von Elektromagneten erzeugt wird.

### Vorteile der Erfindung

Das erfindungsgemäße Kodiersystem mit den kennzeichnenden Merkmalen des Hauptanspruchs hat den Vorteil, daß zwischen Feststationen und einem mobilen Datenträger ein bidirektionaler Datenaustausch stattfindet, mit dem der Fertigungsablauf eines zu bearbeitenden Werkstücks, an dem sich der mobile Datenträger befindet, optimierbar ist. Entscheidungen für den weiteren Fertigungsablauf können hierbei sowohl von einer zentralen Datenverarbeitung, von einer Auswerteschaltung der Feststation sowie vom mobilen Datenträger selbst getroffen werden. Durch die spezielle Art der Datenübertragung vom mobilen Datenträger zur Feststation, bei der der Ausschwingvorgang der Spannungen in Koppelspulen beeinflußt bzw. nicht beeinflußt wird, ist eine im hohen Maße störsichere Datenübertragung in kürzester Zeit möglich, so daß eine sehr hohe Anzahl binärer Daten beim Vorbeibewegen des mobilen Datenträgers an der Feststation ohne Abbremsen oder Anhalten der Werkstückträger oder Werkstücke auf der Transferstraße auszulesen sind.

Die erfindungsgemäße Ausgestaltung der Koppelspulen als Übertrager ermöglicht zum einen eine genügend große Energieübertragung von den Feststationen zu den mobilen Datenträgern über relevante Distanzen und innerhalb der kurzen zur Verfügung stehenden Übertragungszeiten. Die sich ergebende Feldverteilung ermöglicht zum anderen kurze Montageabstände zwischen benachbarten mobilen Datenträgern ohne daß gegenseitige Beeinflussung über die induktive Kopplung auftritt.

Durch die in den Unteransprüchen aufgeführten Maßnahmen sind vorteilhafte Weiterbildungen und Verbesserungen des im Hauptanspruch angegebenen Kodiersystems möglich.

Besonders vorteilhaft ist es, wenn die elektronische Schaltung des mobilen Datenträgers zum Auslesen seiner Daten beim Einkoppeln einer von der Lesestation erzeugten Impulskette abhängig vom jeweiligen Binärwert 1 bzw. 0 der auszulesenden Daten den Ausschwingvorgang zeitlich verzögert bzw. nicht verzögert. Dies ist mit einem relativ einfachen Schaltungsaufbau möglich, indem die elektronische Schaltung des Datenträgers abhängig vom jeweils übertragenen Binärwert eine weitere Koppelspule zuschaltet oder nicht zuschaltet. Durch eine ebenfalls einfache elektronische Schaltung kann dabei eine bestimmte Zeit nach dem Ende eines Impulses der Impulskette der Spannungswert beim Ausschwingvorgang an der Koppelspule in der Feststation erfaßt werden. In einer Schwellwertschaltung wird daraus der übertragene Binärwert ermittelt.

Weitere Einzelheiten und Verbesserungen des im Hauptanspruch angegebenen Kodiersystems ergeben sich aus weiteren Unteransprüchen in Verbindung mit der folgenden Beschreibung.

### Zeichnung

Ein Ausführungsbeispiel der Erfindung ist in der Zeichnung dargestellt und in der nachfolgenden Beschreibung näher erläutert. Es zeigen Figur 1 eine Transferstraße mit dem erfindungsgemäßen Kodiersystem, Figur 2 eine Lesestation und einen daran vorbeibewegten mobilen Datenträger im Blockschaltbild, Figur 3 zeigt den Schaltungsaufbau der Lesestation und des mobilen Datenträgers, Figur 4 zeigt den Spannungsverlauf an verschiedenen Schaltungspunkten des Kodiersystems beim Auslesen von Daten des Datenträgers und Figur 5 zeigt den Spannungsverlauf an verschiedenen Schaltungspunkten des Kodiersystems beim Einschreiben neuer Daten.

### Beschreibung des Ausführungsbeispiels

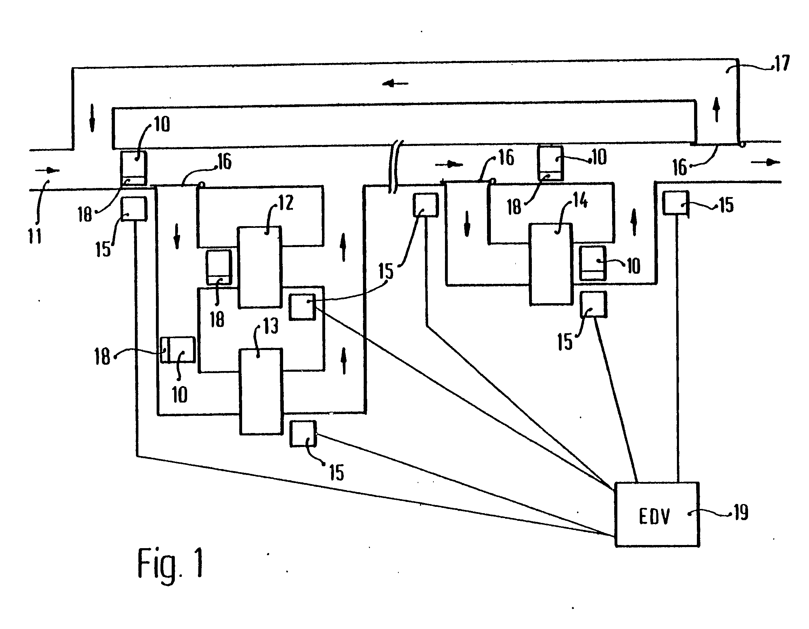

Figur 1 zeigt eine Transferstraße für eine Vielzahl von zu bearbeitenden Werkstücken, die jeweils auf einen Werkstückträger 10 festgespannt werden. Die Werkstückträger 10 werden am Eingang 11 der Transferstraße auf ein Transportband gesetzt, welches mit einer bestimmten Geschwindigkeit die Werkstückträger 10 in Pfeilrichtung weiterbewegt. Die Transferstraße ist mit verschiedenen Bearbeitungsmaschinen versehen, von denen in Figur 1 nur drei dargestellt sind. An allen Abzweigungen der Transferstraße sowie an allen Bearbeitungsmaschinen 12, 13, 14 sind Lesestationen 15 angeordnet. An den Abzweigungen sind jeweils Weichen 16 angeordnet, über welche die Werkstückträger 10 wahlweise umgelenkt werden können. Werkstücke, die im ersten Durchlauf noch nicht vollständig oder mit ausreichender Genauigkeit bearbeitet sind, können über eine Schleife 17 wieder auf den Eingang der Transferstraße zurückgeführt werden. Die Werkstückträger 10 sind auf ihrer den Lesestationen 15 zugewandten Seite mit einem Datenträger 18 versehen, dessen Daten in einem elektronischen Speicher, z. B. einem EEPROM abgelegt sind. Der Datenträger 18 enthält binäre Daten über die Kennung eines jeden Werkstückträgers 10, über dem Bearbeitungs- und Montagezustand des darin eingespannten Werkstückes sowie gegebenenfalls über dessen Lage. An den Lesestationen 15 werden die gespeicherten Daten aus dem Datenträger 18 der Werkstückträger 10 ausgelesen, sobald diese an einer Lesestation 15 vorbeibewegt werden. Die Lesestationen 15 sind über eine Auswerteschaltung mit einer zentralen Datenverarbeitung 19 verbunden und sie sind wahlweise mit einem Programmspeicher zum Einschreiben weiterer Daten in den mobilen Datenträger 18 versehen.

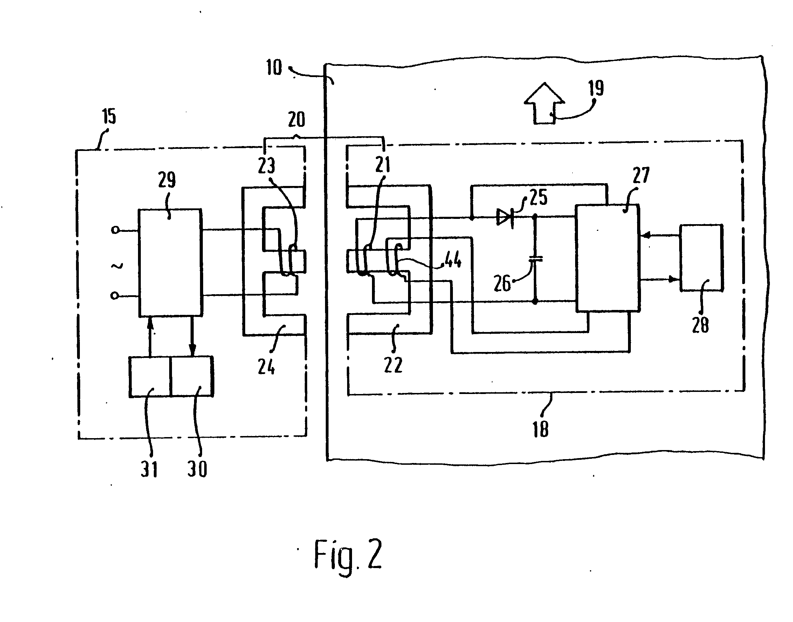

Figur 2 zeigt eine der stationären Lesestationen 15 sowie einen mobilen Datenträger 18, der an einem Werkstückträger 10 befestigt auf der Transferstraße in Pfeilrichtung an der Lesestation 15 vorbeibewegt wird. Über eine induktive Kopplung mittels eines Übertragers 20 werden von der Lesestation 15 die Daten des mobilen Datenträgers 18 ausgelesen. Eine erste Koppelspule 21 des Übertragers 20 ist auf einem Ferritkern 22 des Datenträgers 18 angeordnet und eine zweite Koppelspule 23 sitzt auf einem entsprechenden Ferritkern 24 der Lesestation 15. Zur Energieversorgung des Datenträgers 18 ist die ihm zugeordnete Koppelsspule 21 als Durchflußwandler über eine Diode 25 auf einen Speicherkondensator 26 geschaltet, der eine elektronische Schaltung 27 versorgt. Die Schaltung 27 wirkt zum Auslesen sowie zum Einschreiben von Daten mit einem Datenspeicher 28 zusammen. Die Lesestation 15 enthält ebenfalls eine elektronische Schaltung 29, die mit einer Auswerteschaltung 30 sowie mit einem Programmspeicher 31 zusammenwirkt und zur Spannungsversorgung an ein Wechselspannungsnetz anzuschließen ist.

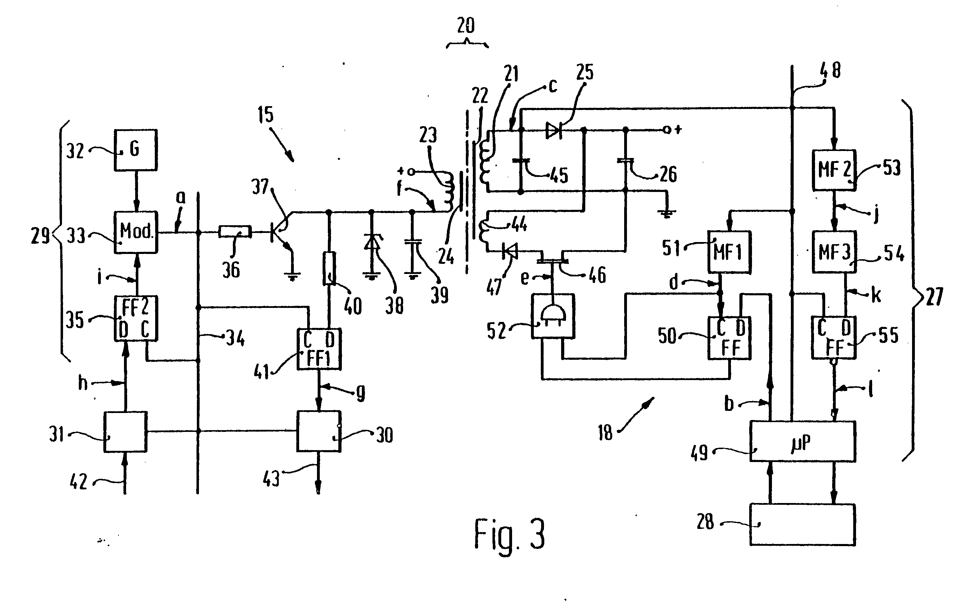

In Figur 3 ist der prinzipielle Schaltungsaufbau der Lesestation 15 und des Datenträgers 18 nach Figur 2 dargestellt. Die elektronische Schaltung 29 enthält einen Impulsgenerator 32, in dem mit einer Frequenz von 4 MHz Impulse erzeugt und einer Modulationsstufe 33 zugeführt werden. Die Modulationsstufe 33 enthält einen Frequenzteiler, der abhängig von einem Eingangssignal die Generatorfrequenz auf 1/4 oder 1/5 herabsetzt. Der Ausgang der Modulationsstufe 33 ist mit einer Taktleitung 34 verbunden, an die der Takteingang der Auswerteschaltung 30 sowie des Programmspeichers 31 angeschlossen ist. Außerdem ist die Taktleitung 34 mit dem Takteingang eines D-Flipflops 35 verbunden dessen Signaleingang mit dem Signalausgang des Programmspeichers 31 und dessen Signalausgang mit dem Steuereingang der Modulationsstufe 33 verbunden ist. Die Taktleitung 34 ist ferner über einen Widerstand 36 mit der Basis eines npn-Schalttransistors 37 verbunden, der emitterseitig auf Masse liegt und kollektorseitig mit einem Ende der Koppelspule 23 verbunden ist. Der andere Anschluß der Koppelspule 23 liegt am Pluspol einer Versorgungsspannung. Zum Schutz des Transistors 37 ist parallel zu seiner Schaltstrecke eine Z-Diode 38 angeordnet. Des weiteren ist ein Kondensator 39 zur Schaltstrecke des Transistors 37 parallel geschaltet. Am emitterseitigem Ende des Transistors 37 ist außerdem über einen Widerstand 40 der Signaleingang eines weiteren D-Flipflops 41 angeschlossen, dessen Takteingang mit der Taktleitung 34 und dessen Signalausgang mit der Auswerteschaltung 30 verbunden ist. Über den Eingang 42 des Programmspeichers 31 sowie über den Ausgang 43 der Auswerteschaltung 30 können gegebenenfalls Daten mit der zentralen Datenverarbeitung 19 ausgetauscht werden.

Der mobile Datenträger 18 hat einen Ferritkern 22, der neben der Koppelspule 21 noch eine weitere Koppelspule 44 trägt. Parallel zur ersten Koppelspule 21 liegt ein Kondensator 45, während die weitere Koppelspule 44 über einen Feldeffekt-Transistor 46 zum Speicherkondensator 26 parallel geschaltet ist. Der Transistor 46 ist außerdem mit einer Diode 47 in Reihe geschaltet, wobei die Diode 47 kathodenseitig mit der Spule 44 verbunden ist und der Transistor 46 gemeinsam mit dem einen Anschluß der ersten Koppelspule 21 auf Masse gelegt ist. Der andere Anschluß der Koppelspule 21 ist mit einer Taktleitung 48 verbunden, die innerhalb der elektronischen Schaltung 27 mit einem Mikroprozessor 49 verbunden ist, über dem der Datenspeicher 28 zur Datenausgabe oder Datenabspeicherung angesteuert wird. Die auszulesenden Daten werden vom Mikroprozessor 49 auf den Signaleingang eines D-Flipflops 50 gegeben, dessen Takteingang am Ausgang einer monostabilen Kippstufe 51 angeschlossen ist. Der Eingang dieser Kippstufe 51 ist wiederum mit der Taktleitung 48 verbunden. Der Ausgang des Flipflops 50 ist auf ein UND-Gatter 52 geschaltet, dessen zweiter Eingang mit dem Ausgang der Kippstufe 51 verbunden ist. Der Ausgang des Gatters 52 liegt am Gate-Anschluß des Transistors 46. Zum Einlesen von Daten ist außerdem die Taktleitung 48 mit dem Eingang einer zweiten monostabilen Kippstufe 53 verbunden, dem eine dritte monostabile Kippstufe 54 nachgeschaltet ist. Der Ausgang dieser Kippstufe 54 liegt am Signaleingang eines weiteren D-Flipflops 55, dessen Takteingang ebenfalls mit der Taktleitung 48 verbunden ist. Der Signalausgang dieses Flipflops 55 geht auf den Dateneingang des Mikroprozessors 49.

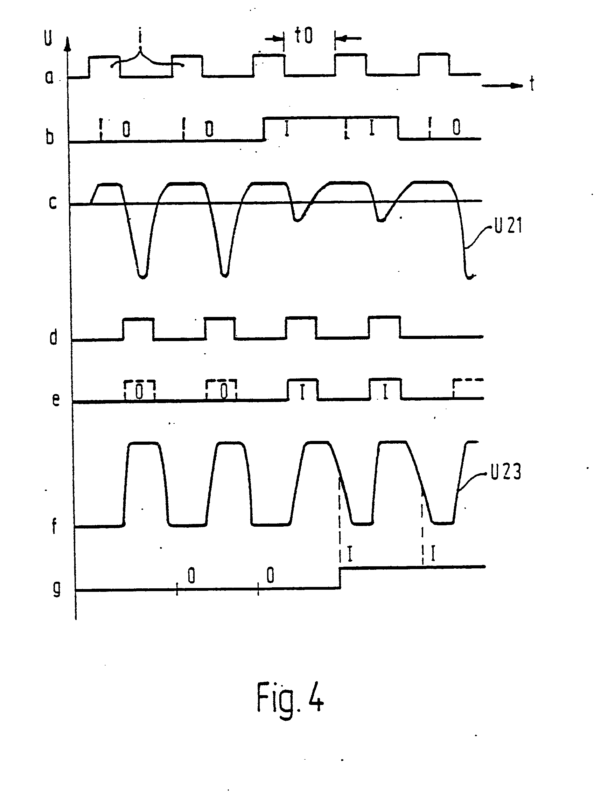

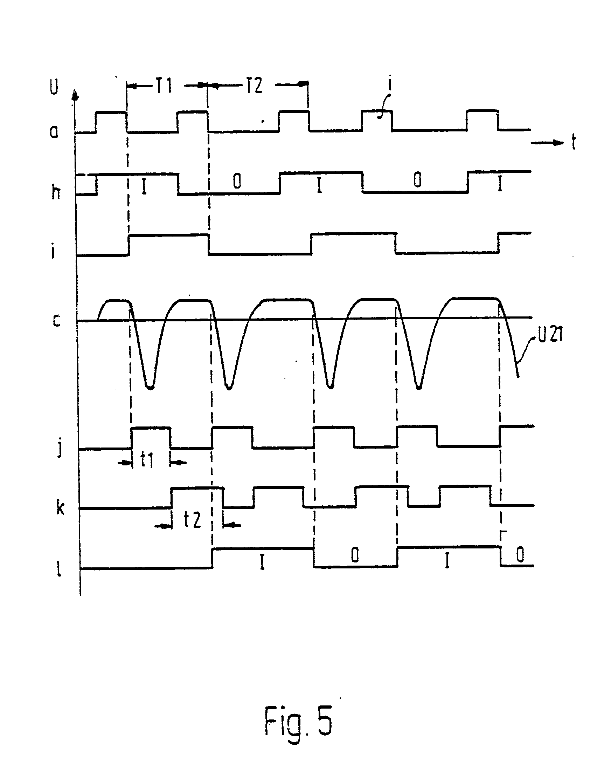

Die Funktionsbeschreibung des erfindungsgemäßen Kodiersystems wird nunmehr mit Hilfe der an verschiedenen Punkten der Schaltungsanordnung nach Figur 3 auftretenden Signale gemäß Figur 4 für das Auslesen und gemäß Figur 5 für das Einschreiben von Daten am Datenträger 18 näher erläutert. Die Lesestation 15 ist ständig eingeschaltet, so daß am Ausgang der Modulationsstufe 33 im Punkt a die in Figur 4 dargestellte Impulskette erscheint, deren Impulse i ständig den gleichen Abstand to haben, solange vom Programmspeicher 31 keine neuen Daten an das Flipflop 35 gegeben werden. Die Impulskette im Punkt a der Schaltung schaltet den Transistor 37 in gleichem Takt ein und aus, so daß die an einer Versorgungsspannung angeschlossene Koppelspule 23 im gleichen Takt von einem Strom durchflossen wird. An den in Figur 2 erkennbaren Polen des Eisenkernes 24 der Lesestation 15 wird folglich ein entsprechendes Magnetfeld wirksam. Sobald nun ein Werkstückträger 10 auf der Transferstraße an der Lesestation 15 vorbeibewegt wird, wird dieses Magnetfeld vom Eisenkern 22 seines Datenträgers 18 erfaßt. Die Eisenkerne 22 und 24 bilden jetzt mit ihren Koppelspulen 21 und 23 den Übertrager 20, wobei in der Koppelspule 21 eine entsprechende Impulskette erzeugt und über die Diode 25 auf den Speicherkondensator 26 geschaltet wird. Über die Plusklemme versorgt der Speicherkondensator 26 die elektronische Schaltung 27 mit elektrischer Energie. Damit kann der Datenträger 18 nun mit der Lesestation 15 in Verbindung treten, indem er zunächst die in seinem Datenspeicher 28 abgelegten Daten ausliest und anschließend gegebenenfalls neue Daten von der Lesestation 15 im Datenspeicher 28 ablegt.

Beim Auslesen der im Datenspeicher 28 abgelegten Daten werden diese zunächst mit Hilfe der Spannungsimpulse auf der Taktleitung 48 über den Mikroprozessor 49 als Binärwerte 0 oder 1 am Datenausgang des Mikroprozessors 49 im Punkt b der Schaltung ausgegeben. Der Spannungsverlauf am nicht geerdeten Anschluß der Koppelspule 21 im Punkt c der Schaltung entspricht der Spannung auf der Taktleitung 48. In Figur 4 ist erkennbar, daß mit dem Ende eines jeden Impulses i von der Lesestation 15 an der Koppelspule 21 im Punkt c der Schaltung ein Ausschwingvorgang auftritt, indem die dort gemessene Spannung U21 in den negativen Bereich durchschwingt. Mit der abfallenden Flanke dieser Spannung U21 wird jeweils das Flipflop 51 für eine eingestellte Zeit umgesteuert und an seinem Ausgang im Punkt d der Schaltung treten entsprechende Impulse auf. Diese Impulse gelangen auf den Takteingang des D-Flipflops 50, auf dessen Signaleingang die auszulesenden binären Daten nach Punkt b der Schaltung anstehen. Im Beispielsfall liegt am Signaleingang dieses Flipflops 50 während der ersten zwei Impulse i der Impulskette eine logische 0, die folglich mit den Taktimpulsen im Punkt d der Schaltung auf den Signalausgang des Flipflops 50 geschaltet wird. Am Gatter 52 wird nun das Ausgangssignal des Fliflops 55 mit dem Ausgangssignal des Monoflops 51 logisch verknüpft, so daß am Ausgang dieses Gatters 52 im Punkt e der Schaltung während der ersten zwei Impulse i der Impulskette ebenfalls eine logische 0 auftritt. Der Transistor 46 bleibt daher weiterhin gesperrt und die Koppelspule 44 beeinflußt nicht den Ausschwingvorgang der Koppelspule 21. Da auch an der Koppelspule 23 in der Lesestation 15 am Punkt f der Schaltung am Ende eines jeden Impulses i ein Ausschwingvorgang auftritt, wird dieser ebenfalls nicht während der ersten beiden Impulse i von der weiteren Koppelspule 44 beeinflußt. Vielmehr ist der zur ersten Koppelspule 21 des Datenträgers 18 parallel geschaltete Kondensator 45 so dimensioniert, daß seine Umladung den Ausschwingvorgang an der Koppelspule 23 bei nicht zugeschalteter Koppelspule 44 noch beschleunigt. Die positive Halbwelle der Spannung U23 des Ausschwingvorganges ist daher mit Beginn eines weiteren Impulses i bereits abgeklungen. Das hat zur Folge, daß im Beispielsfall nach den ersten Impulsen i der Impulskette mit Beginn des nachfolgenden Impulses am Signaleingang des Flipflops 41 keine Spannung anliegt und folglich jeweils eine logische 0 auf seinen Ausgang im Punkt g der Schaltung geschaltet wird. Diese logische 0 entspricht der ausgelesenen logischen 0 im Datenträger 18 am Datenausgang des Mikroprozessors 49 im Punkt e der Schaltung.

Während der beiden folgenden Impulse i der Impulskette im Punkt a der Schaltung erscheint nunmehr am Ausgang des Mikroprozessors 49 im Punkt e der Schaltung eine logische 1, die mit den Impulsen am Ausgang des Monoflops 51 im Punkt d der Schaltung auf den Ausgang des Flipflops 50 gelangt. Dadurch wird das Gatter 52 für die Impulse des Monoflops 51 freigeschaltet, so daß an seinem Ausgang im Punkt e der Schaltung entsprechende Impulse auftreten, die den Transistor 46 jeweils am Ende der Impulse i in den leitenden Zustand umschalten. Dadurch wird die weitere Koppelspule 44 des Übertragers 20 zugeschaltet. Die in dieser Spule 44 beim Ausschwingvorgang induzierte Spannung treibt jetzt einen Strom, mit dem der Speicherkondensator 26 zusätzlich aufgeladen wird und der außerdem den Ausschwingvorgang zeitlich verzögert. Durch das Zuschalten der Koppelspule 44 wird auch die Spannung U21 im Punkt c der Schaltung in der negativen Halbwelle des Ausschwingvorganges gedämpft und die positive Halbwelle der Spannung U23 im Punkt f der Schaltung wird nun nicht mehr durch die Umladung des Kondensators 45 beschleunigt. Das hat zur Folge, daß beim Ausschwingvorgang die erste Halbwelle der Spannung U23 im Punkt f der Schaltung noch beim Beginn des nachfolgenden Impulses i der Impulskette einen so großen Spannungswert hat, daß das Flipflop 41, welches an seinem Signaleingang diesen Spannungswert abfühlt, nunmehr eine logische 1 auf den Signalausgang im Punkt g der Schaltung gibt.

Auf diese Weise wird erreicht, daß die zeitlich nacheinander aus dem Datenspeicher 28 des Datenträgers 18 ausgelesenen binären Daten am Ende eines jeden Impulses i der Impulskette über das Flipflop 50 des Datenträgers 18 abgerufen und mit Beginn eines jeden nachfolgenden Impulses i der Datenkette über das Flipflop 41 der Lesestation 15 ausgelesen und auf die Auswerteschaltung 30 gegeben wird. Dabei wird durch die elektronische Schaltung 27 des Datenträgers 18 beim Auslesen der binären Daten nach jedem Impuls i der Impulskette abhängig vom jeweiligen Binärwert der Daten der Ausschwingvorgang der Spannungen U21 und U23 in den Koppelspulen 21 und 23 des Übertragers 20 beeinflußt oder nicht beeinflußt. Die elektronische Schaltung 29 der Lesestation 15 erfaßt die so ausgelesenen Daten, indem sie beim Ausschwingvorgang den Verlauf der Spannung U23 an der Koppelspule 23 der Lesestation 15 abfühlt. Der Ausschwingvorgang wird folglich abhängig vom jeweiligen Binärwert der auszulesenden Daten durch die elektronische Schaltung 27 des mobilen Datenträgers 18 zeitlich verzögert oder beschleunigt, indem die weitere Koppelspule 44 des Übertragers 20 abhängig vom jeweils zu übertragenden Binärwert der auszulesenden Daten zuschaltet bzw. nicht zuschaltet. Die elektronische Schaltung 29 der Lesestation 25 ermittelt den Binärwert der ausgelesenen Daten, indem sie eine bestimmte Zeit nach dem Ende eines jeden Impulses i der Impulskette den Spannungswert U23 in der ersten Periode des Ausschwingvorganges an der Koppelspule 23 abfühlt.

Im erfindungsgemäßen Kodiersystem ist vorgesehen, daß die Lesestation 15 in einem ersten Teil der Impulskette die Daten des mobilen Datenträgers 18 ausliest und in einem weiteren Teil der Impulskette durch Verändern ihrer Periodendauer neue Daten in den Datenträger 18 einschreibt. Dies soll nunmehr mit Hilfe der in Figur 5 dargestellten Signale näher erläutert werden.

Die neu einzuschreibenden Daten sind im Programmspeicher 31 enthalten oder sie werden durch die zentrale Datenverarbeitung 19 (Figur 1), über einen Dateneingang 42 in den Programmspeicher 31 eingegeben und von dort nach dem vorangegangenen Auslesen der im Datenträger 18 gespeicherten Daten als Folge von Binärwerten (logische 0 oder 1) auf den Signaleingang des Flipflops 35 gegeben. Die im Punkt a der Schaltung auftretende Impulskette gelangt über die Taktleitung 34 auch zum Takteingang des Flipflops 35, so daß die vom Programmspeicher 31 ausgegebenen Binärdaten mit dem Ende eines jeden Impulses i der Impulskette über den Signalausgang des Flipflops 35 im Punkt i der Schaltung auf die Modulationsstufe 33 gegeben werden. Die Modulationsstufe 33 teilt die Impulse des Impulsgenerators 32 beim Eingang einer logischen 1 auf 1/5 und beim Eingang einer logischen 0 auf 1/4 herunter. Dadurch entsteht bei der Impulskette im Punkt a der Schaltung bei einer logischen 1 am Eingang der Modulationsstufe 33 eine kleinere Periodendauer T1 der Impulskette und bei einer logischen 0 eine größere Periodendauer T2. Durch den Übertrager 20 werden die Impulse i der Impulskette — wie bereits zu Figur 4 erläutert — auf den Datenträger 18 gekoppelt. Die positiven Halbwellen der im Punkt c der Schaltung aufgenommenen Spannung U21 an der Koppelspule 21 dienen wiederum zur Energieversorgung des Datenträgers 18.

Mit der Abstiegsflanke dieser Halbwelle wird über die Taktleitung 48 nun jeweils das Monoflop 53 für eine kurze Zeit t1 gesetzt. Die entsprechenden Impulse im Punkt j der Schaltung gehen auf das nachgeschaltete Monoflop 54. Dieses Monoflop 54 wird nun jeweils mit dem Impulsende des Monoflops 53 für eine bestimmte Zeit t2 gesetzt. Die beiden Zeiten t1 und t2 der Monoflops 53 und 54 sind so gewählt, daß sie zusammen größer als die kleine Periodendauer T1 aber kleiner als die größere Periodendauer T2 der Impulskette sind. Die Impulse des zweiten Monoflops 54 im Punkt k der Schaltung liegen am Signaleingang des Flipflops 55 und werden durch den Takteingang jeweils mit dem Ende eines jeden Impulses i der Impulskette auf den Signalausgang des Flipflop 55 geschaltet. Beim Einschreiben einer logischen 1 im Punkt h der Schaltung ist die Periodendauer T1 klein und die Impulszeit t2 des Monoflops 54 ist am Ende der Periodendauer T1 noch nicht abgelaufen, so daß nunmehr am Ausgang des Flipflops 55 im Punkt l der Schaltung eine logische 1 erscheint, die vom Mikroprozessor 49 an einer ihr zugeordneten Stelle im Datenspeicher 28 abgelegt wird. Beim Einschreiben einer logischen 0 im Punkt h der Schaltung ist die Periodendauer T2 der Impulskette größer, so daß die Impulsdauer t2 des Monoflops 54 bereits abgelaufen ist und folglich am Ausgang des Flipflops 55 am Ende der Periodendauer T2 eine logische 0 erscheint, die in gleicher Weise vom Mikroprozessor 44 im Datenspeicher 28 abgelegt wird. Auf diese Weise wird erreicht, daß die elektronische Schaltung 27 des Datenträgers 18 am Ende eines jeden Impulses i aus dem Teil der Impulskette, der zum Einschreiben von Daten vorgesehen ist, jeweils die Periodendauer T1 oder T2 bis zum Ende des folgenden Impulses i mit einem vorgegebenen Wert, der sich aus den Zeiten t1 und t2 der Monoflops 53 und 54 ergibt, vergleicht und dem sich daraus ergebenen Binärwert jeweils im Datenspeicher 28 ablegt.

Durch das Einschreiben neuer Daten an den Lesestationen 15 ist es möglich, für jedes Werkstück, was die Transferstraße nach Figur 1 durchläuft, genaue Daten über die Maßgenauigkeit, über die verschiedenen Verarbeitungsstufen, sowie über die durchlaufenen Bearbeitungsmaschinen der Transferstraße in dem ihm zugeordneten Datenträger 18 einzugeben. Bei einer Endkontrolle können auf diese Weise ungenau arbeitende oder nicht ausgelastete Maschinen ermittelt werden. Außerdem können beispielsweise die Datenträger 18 durch entsprechende Steuerbefehle Entscheidungen darüber herbeiführen, an welcher Bearbeitungsmaschine das Werkstück weiterbearbeitet werden soll. Entsprechende Befehle können von der Lesestation 15 abgefragt und von dort unmittelbar oder über eine zentrale Datenverarbeitung auf die Transferstraße übertragen werden. Durch entsprechende Stellung der Weichen 16 (Figur 1) wird dann der Weg des Werkstückträgers 10 gesteuert.

Das Ausführungsbeispiel zeigt, daß der in Figur 4 unter f dargestellte Ausschwingvorgang in der Koppelspule 23 so gesteuert wird, daß bereits in der ersten Periode der Spannungswert U23 nach der Zeit to den am Datenträger 18 ausgelesenen Einärwert wiedergibt. Eine noch stärkere Beeinflussung des Ausschwingvorganges durch die offene oder geschlossene zusätzliche Koppelspule 44 ist in der negativen und der zweiten Periode des Ausschwingvorganges erkennbar, weil dort die zeitliche Versetzung neben dem veränderten Amplitudenverlauf noch mit eingeht. Für ein betriebssicheres Auslesen der Daten kann es daher zweckmäßig sein, den Ausschwingvorgang so zu steuern, daß der Spannungswert der negativen und der zweiten Periode des Ausschwingvorganges eine bestimmte Zeit to nach dem Ende eines Impulses i der Impulskette a abgefühlt wird. Bei einer ausgelesenen logischen 0 ist dann die zweite Schwingung der Spannung U23 bereits vorhanden, während sie bei einer logischen 1 noch nicht vorhanden ist. Die dadurch gegenüber dem Ausführungsbeispiel auftretende Signalumkehr kann durch einen Inverter vor oder hinter dem Flipflop 41 wieder korrigiert werden.


**Patentansprüche**

1. Kodiersystem zum Erfassen von binären Daten über die Kennung sowie den Bearbeitungs- und Montagezustand von Werkstücken auf einer Transferstraße, das folgende Merkmale umfaßt :

a) die mobilen Werkstücke, Werkstückträger (10) oder dgl. sind mit einem Datenträger (18) versehen ;

b) der mobile Datenträger (18) wirkt über eine induktive Kopplung berührungslos mit an der Transferstraße angeordneten Feststationen (15) zusammen ;

c) die Feststation (15) liest über die induktive Kopplung Daten aus einem an ihr vorbeibewegten mobilen Datenträger (18) aus durch Abfühlen des Spannungsverlaufs an wenigstens einer in der Feststation (15) angeordneten Koppelspule (23) ;

d) beim Auslesevorgang ist der Spannungsverlauf an wenigstens einer ersten, im Datenträger (18) angeordneten Koppelspule (21) abhängig vom jeweiligen übertragenen Binärwert (1/0) durch eine elektronische Schaltung (27) im mobilen Datenträger (18) beeinflußbar ;

e) der mobile Datenträger (18) enthält wenigstens einen Energiespeicher (26), der durch eine von der Feststation (15) erzeugte Impulskette (a) beim Vorbeibewegen des mobilen Datenträgers (18) mit elektrischer Energie aufladbar ist ; dadurch gekennzeichnet,

f) daß die induktive Kopplung mittels eines Übertragers (20) erfolgt, der die im mobilen Datenträger (18) angeordnete erste Koppelspule (21) und die in der Feststation (15) angeordnete Koppelspule (23) sowie in den Koppelspulen (21, 23) angeordnete Kerne (22, 24) enthält,

g) daß die Feststation (15) in wenigstens einem Teil der Impulskette (a) neue Daten in den mobilen Datenträger (18) schreibt und

h) daß die elektronische Schaltung (27) des mobilen Datenträgers (18) beim Auslesen der binären Daten nach jedem Impuls (i) der Impulskette (a) abhängig vom jeweiligen Binärwert (1/0) der Daten den Ausschwingvorgang der Spannungen (U21, U23) in den Koppelspulen (21, 23) des Übertragers (20) beeinflußt bzw. nicht beeinflußt.

2. Kodiersystem nach Anspruch 1, dadurch gekennzeichnet, daß die elektronische Schaltung (27) des mobilen Datenträgers (18) abhängig vom jeweiligen Binärwert (1/0) der auszulesenden Daten den Ausschwingvorgang zeitlich verzögert bzw. nicht verzögert.

3. Kodiersystem nach einem der Ansprüche 1 oder 2, dadurch gekennzeichnet, daß die elektronische Schaltung (27) des mobilen Datenträgers (18) abhängig vom jeweils zu übertragenen Binärwert (1/0) eine weitere Koppelspule (44) des Übertragers (20) zuschaltet.

4. Kodiersystem nach Anspruch 3, dadurch gekennzeichnet, daß zur ersten Koppelspule (21) des Datenträgers (18) ein Kondensator (45) parallel geschaltet ist, dessen Umladung durch entsprechende Dimensionierung den Ausschwingvorgang bei nicht zugeschalteter weiterer Koppelspule (44) beschleunigt.

5. Kodiersystem nach Anspruch 1 oder 3, dadurch gekennzeichnet, daß die in den Koppelspulen (21, 23, 44) angeordneten Kerne (22, 24) Ferritkerne sind.

6. Kodiersystem nach Anspruch 1, dadurch gekennzeichnet, daß eine elektronische Schaltung (29) der Feststation (15) die ausgelesenen Daten erfaßt, indem sie beim Ausschwingvorgang den Spannungsverlauf (U23) an der Koppelspule (23) der Lesestation (15) abfühlt.

7. Kodiersystem nach Anspruch 6, dadurch gekennzeichnet, daß die elektronische Schaltung (29) der Lesestation (15) eine bestimmte Zeit (to) nach dem Ende eines Impulses (i) der Impulskette (a) den Spannungswert (U23) beim Ausschwingvorgang an der Koppelspule (23) abfühlt und den daraus ermittelten Binärwert (1/0) der ausgelesenen Daten einer Auswerteschaltung (30) zuführt.

8. Kodiersystem nach Anspruch 7, dadurch gekennzeichnet, daß die elektronische Schaltung (29) der Lesestation (15) den Spannungswert (U23) in der zweiten Periode des Ausschwingvorgangs abfühlt.

9. Kodiersystem nach einem der Ansprüche 1 bis 8, dadurch gekennzeichnet, daß die Lesestation (15) in einem ersten Teil der Impulskette (a) die Daten des mobilen Datenträgers (18) ausliest und in einem weiteren Teil der Impulskette (a) durch Verändern ihrer Periodendauer (T1/T2) neue Daten in den Datenträger (18) einschreibt.

10. Kodiersystem nach Anspruch 1 oder 9, dadurch gekennzeichnet, daß die elektronische Schaltung (27) des Datenträgers (18) am Ende eines jeden Impulses (i) der Impulskette (a) jeweils die Periodendauer (T1, T2) bis zum Ende des folgenden Impulses mit einem vorgegebenen Wert (t1 + t2) vergleicht und den davon abhängigen Binärwert (1/0) der einzuschreibenden Daten jeweils in einen Datenspeicher (28) ablegt.

**Claims**

1. Coding system for reading binary data via the identifier as well as the machining and assembly status of workpieces on a transfer line, which includes the following features :

a) the mobile workpieces, workpiece carriers (10) or similar are provided with a data carrier (18) ;

b) the mobile data carrier (18) interacts without contact via an inductive coupling with fixed stations (15) arranged on the transfer line ;

c) the fixed station (15) reads out data via the inductive coupling from a mobile data carrier (18) which is moved past it by sensing the voltage curve at at least one coupling coil (23) arranged in the fixed station (15) ;

d) during the read-out process, the voltage curve can be influenced at at least one first coupling coil (21), arranged in the data carrier (18), depending on the binary value (1/0) transferred in each case, by an electronic circuit (27) in the mobile data carrier (18) ;

e) the mobile data carrier (18) contains at least one energy store (26), which can be charged with electrical energy by means of a pulse train (a) generated by the fixed station (15), when the mobile data carrier (18) is moved past ; characterized in that

f) the inductive coupling takes place by means of a transformer (20) which contains the first coupling coil (21) arranged in the mobile data carrier (18) and the coupling coil (23) arranged in the fixed station (15) as well as the cores (22, 24) arranged in the coupling coils (21, 23),

g) the fixed station (15) writes new data onto the mobile data carrier (18) in at least one part of the pulse train (a) and

h) the electronic circuit (27) of the mobile data carrier (18) influences, or does not influence, respectively, the decay process of the voltages (U21, U23) in the coupling coils (21, 23) of the transformer (20) during reading out of the binary data after each pulse (i) of the pulse train (a), depending on the corresponding binary value (1/0).

2. Coding system according to Claim 1, characterized in that the electronic circuit (27) of the mobile data carrier (18) temporally delays, or does not delay, the decay process, depending on the corresponding binary value (1/0) of the data to be read out.

3. Coding system according to one of Claims 1 or 2, characterized in that the electronic circuit (27) of the mobile data carrier (18), depending on the binary value (1/0) to be transferred in each case, connects a further coupling coil (44) of the transformer (20).

4. Coding system according to Claim 3, characterized in that a capacitor (45) is connected in parallel to the first coupling coil (21) of the data carrier (18), the charge reversal of which capacitor accelerates the decay process when further coupling coils (44) are not connected, by means of corresponding dimensioning.

5. Coding system according to Claim 1 or 3, characterized in that the cores (22, 24) arranged in the coupling coils (21, 23, 44) are ferrite cores.

6. Coding system according to Claim 1, characterized in that an electronic circuit (29) of the fixed station (15) reads the data read out, in that it senses the voltage curve (U23) at the coupling coil (23) of the read station (15) during the decay process.

7. Coding system according to Claim 6, characterized in that the electronic circuit (29) of the read station (15) senses the voltage (U23) during the decay process at the coupling coil (23) a specified time (to) after the end of a pulse (i) of the pulse train (a), and supplies the binary value (1/0) of the data read out thus determined to an evaluation circuit (30).

8. Coding system according to Claim 7, characterized in that the electronic circuit (29) of the read station (15) senses the voltage (U23) in the second period of the decay process.

9. Coding system according to one of Claims 1 to 8, characterized in that the read station (15) reads out the data of the mobile data carrier (18) in a first part of the pulse train (a) and records new data on the data carrier (18) in a further part of the pulse train (a) by changing its period (T1/T2).

10. Coding system according to Claim 1 or 9, characterized in that the electronic circuit (27) of the data carrier (18) compares at the end of each pulse (i) of the pulse train (a) in each case the period (T1, T2) up to the end of the following pulse with a specified value (t1 + t2) and stores the binary value (1/0) of the data to be recorded dependent on this in each case in a data memory (28).

**Revendications**

1. Système de codage pour l'enregistrement de données binaires sur l'identification ainsi que sur l'état d'usinage et de montage de pièces d'œuvre sur une ligne de transfert, ce système comportant les particularités suivantes :

a) les pièces d'œuvre mobiles, les supports de pièces d'œuvre (10), ou les dispositifs analogues, sont munis d'un support de données (18),

b) le support mobile de données (18) coopère par l'intermédiaire d'un couplage inductif, sans contact, avec les stations fixes (15) disposées sur la ligne de transfert,

c) la station fixe (15) lit, par l'intermédiaire du couplage inductif, des données en provenance d'un support mobile de données (18) déplacé devant elles, en détectant l'évolution de la tension sur au moins une bobine de couplage (23) disposée dans la station fixe (15),

d) lors du processus de lecture, l'évolution de la tension sur au moins une première bobine de couplage (21) disposée sur le support de données (18) susceptible d'être influencé par un circuit électronique (27) sur le support mobile de données (18) en fonction de la valeur binaire (1/0) respectivement transmise,

e) le support mobile de données (18) comprend au moins un accumulateur d'énergie (26) qui est susceptible d'être chargé en énergie électrique par l'intermédiaire d'une succession d'impulsions (a) produite par la station fixe (15) lors du passage devant elle du support mobile de données (18), système caractérisé en ce que :

f) le couplage inductif s'effectue au moyen d'un translateur (20) qui comprend la première bobine de couplage (21) disposée sur le support mobile de données (18) et la bobine de couplage (23) disposée dans la station fixe (15), ainsi que les noyaux (22, 24) disposés dans les bobines de couplage (21, 23).

g) la station fixe (15) inscrit de nouvelles données dans le support mobile de données (18) dans au moins une partie de la succession d'impulsions (a),

h) le circuit électronique (27) du support mobile de données (18), lors de la lecture des données binaires, après chaque impulsion (i) de la succession d'impulsions (a) influence ou bien n'influence pas en fonction de la valeur binaire respective (1/0) des données, le processus d'amortissement des tensions (U21, U23) dans les bobines de couplage (21, 23), du translateur (20).

2. Système de codage selon la revendication 1, caractérisé en ce que le circuit électronique (27) du support mobile de données (18) retarde temporairement ou ne retarde pas le processus d'amortissement en fonction de la valeur binaire respective (1/0) des données lues.

3. Système de codage selon une des revendications 1 ou 2, caractérisé en ce que le circuit électronique (27) du support mobile de données (18) connecte une autre bobine de couplage (44) du translateur (20) en fonction de la valeur binaire respective (1/0) à transmettre.

4. Système de codage selon la revendication 3, caractérisé en ce qu'un condensateur (45) est branché en parallèle sur la première bobine de couplage (21) du support de données (18), la décharge de ce condensateur, grâce à un dimensionnement approprié de celui-ci, accélérant le processus d'amortissement lorsqu'une autre bobine de couplage (44) n'est pas connectée.

5. Système de codage selon la revendication 1 ou 3, caractérisé en ce que les noyaux (22, 24) disposés dans les bobines de couplage (21, 23, 44) sont des noyaux de ferrite.

6. Système de codage selon la revendication 1, caractérisé en ce qu'un circuit électronique (29) de la station fixe (15) enregistre les données lues, en les détectant sur la bobine de couplage (23) de la station de lecture (15) lors du processus d'amortissement de l'évolution de la tension (U23).

7. Système de codage selon la revendication 6, caractérisé en ce que le circuit électronique (29) de la station de lecture (15) détecte un certain temps (to) après la fin d'une impulsion (i) de la succession d'impulsions (a), la valeur de tension (U23) lors du processus d'amortissement sur la bobine de couplage (23), et applique un circuit d'exploitation (30), la valeur binaire (1/0), déterminée à partir de cette détection, des données lues.

8. Système de codage selon la revendication 7, caractérisé en ce que le circuit électronique (29) de la station de lecture (15) détecte la valeur de tension (U23) dans la seconde période du processus d'amortissement.

9. Système de codage selon une des revendications 1 à 8, caractérisé en ce que la station de lecture (15) lit dans une première partie de la succession d'impulsions (a) les données du support mobile de données (18), tandis que dans une autre partie de cette succession d'impulsions (a), elle inscrit par modification de la durée de leur période (T1/T2) de nouvelles données dans le support de données (18).

10. Système de codage selon la revendication 1 ou 9, caractérisé en ce que le circuit électronique (27) du support de données (18) compare à la fin de chaque impulsion (i) de la succession d'impulsions (a), respectivement la durée des périodes (T1, T2) jusqu'à la fin de l'impulsion suivante, avec une valeur prédéfinie (t1 + t2) et dépose respectivement dans une mémoire de données (28), la valeur binaire (1/0) dépendant de cette comparaison des données à inscrire.

Fig. 1

Fig. 2

Fig. 3

Fig. 4

Fig. 5